# EUROPEAN PATENT APPLICATION

(11) **EP 4 152 325 A1**
(43) Date of publication of application: **22.03.2023**
(21) Application number: 21828891.8
(22) Date of filing: 21.06.2021
(51) Int. Cl.: G11B 33/04, G11B 33/12, G11B 33/14

(54) **STORAGE DEVICE**

(30) Priority: 22.06.2020 CN 202010572355
(71) Applicant: Huawei Technologies Co., Ltd., Longgang District, Shenzhen, Guangdong 518129 (CN)
(72) Inventor: JIN, Yongchen, Shenzhen, Guangdong 518129 (CN); LUO, Fei, Shenzhen, Guangdong 518129 (CN); WANG, Guoyu, Shenzhen, Guangdong 518129 (CN); CHEN, Ming, Shenzhen, Guangdong 518129 (CN); TANG, Yinzhong, Shenzhen, Guangdong 518129 (CN)
(74) Representative: Gill Jennings & Every LLP
(86) International application number: PCT/CN2021/101211
(87) International publication number: WO 2021/259194

(57) **Abstract**

This application provides a storage device, including a hard disk backplane, a first cascading board, and a hard disk array, where the hard disk array includes a plurality of hard disks; the hard disk array is located on a first side of the hard disk backplane; and the first cascading board is a field replaceable unit FRU, and the first cascading board is located on a second side of the hard disk backplane. The storage device in this application has a new cascading board architecture, can reduce costs of the storage device and improve maintainability of the storage device.

## Description

This application claims priority to Chinese Patent Application No. 202010572355.3, filed with the China National Intellectual Property Administration on June 22, 2020 and entitled "STORAGE DEVICE", which is incorporated herein by reference in its entirety.

### TECHNICAL FIELD

Embodiments of this application relate to the field of storage technologies, and in particular, to a storage device.

### BACKGROUND

In the storage field, for example, in an application such as conventional enterprise storage or video surveillance, a high-density hard disk drive (hard disk drive, HDD) is an irreplaceable part. A combination of an expander (expander) and a hard disk array is a typical architecture of the high-density HDD.

The expander mainly exists in the high-density HDD in two forms. In one form, the expander is directly welded on a printed circuit board (printed circuit board, PCB). In the other form, the expander exists as an independent field replaceable unit (field replaceable unit, FRU). The expander may also be referred to as a cascading board when being used as an FRU. When the expander is directly welded on the PCB board, the expander has a relatively small volume and a flexible arrangement position, so that implementation difficulty of an overall structure can be reduced and a length of a high-speed link can be shortened. However, when the expander chip is faulty or an entire system needs to be upgraded and evolved, a hard disk backplane or even the entire system should be replaced. When the expander is used as an independent FRU, it is easy to maintain, but an arrangement position of the FRU is limited by an overall structure, and consequently a high-speed link is difficult to shorten, resulting in an increase in board and drive costs of the PCB.

Therefore, a new cascading board architecture is required in a storage device to meet overall costs and maintainability requirements.

### SUMMARY

This application provides a storage device. The storage device has a new cascading board architecture, can reduce costs of the storage device and improve maintainability of the storage device.

According to a first aspect, a storage device is provided, including a hard disk backplane, a first cascading board, and a hard disk array, where the hard disk array includes a plurality of hard disks; the hard disk array is located on a first side of the hard disk backplane; and the first cascading board is a field replaceable unit FRU, and the first cascading board is located on a second side of the hard disk backplane.

In the foregoing solution, the cascading board and the hard disk array are respectively located on the two sides of the hard disk backplane, so that the cascading board does not occupy a hard disk slot, does not affect a capacity of the storage device, and does not squeeze a gap of the hard disk array, thereby reducing heat dissipation costs of the storage device. The cascading board of the storage device is an FRU, and therefore can be replaced at any time to facilitate maintenance.

In a possible implementation, the storage device includes a second cascading board, the second cascading board is located on the second side of the hard disk backplane, the hard disk array includes a first hard disk region and a second hard disk region, the first cascading board manages the first hard disk region, and the second cascading board manages the second hard disk region.

The hard disk array can be regionally managed by using a plurality of cascading boards, and each cascading board manages a nearby hard disk array region, thereby shortening a length of a high-speed link between the cascading board and the hard disk backplane.

In another possible implementation, the first cascading board is located at a central position of the first hard disk region, and the second cascading board is located at a central position of the second hard disk region.

A cascading board is located at a central position of each region, so that a link distance between a farthest hard disk in each hard disk region and the cascading board can be further shortened.

In another possible implementation, the first cascading board is installed on the second side of the hard disk backplane in a pluggable manner.

In another possible implementation, the second cascading board is installed on the second side of the hard disk backplane in a pluggable manner.

The cascading board of the storage device can be conveniently unplugged and plugged from a side of the storage device, to facilitate replacement of the cascading board, thereby improving maintainability of a storage system.

In another possible implementation, the first cascading board has an expander chip.

In another possible implementation, the second cascading board has an expander chip.

In another possible implementation, the first side and the second side are respectively an upper side and a lower side of the hard disk backplane.

In another possible implementation, the first side and the second side are respectively a lower side and an upper side of the hard disk backplane.

In another possible implementation, the first side and the second side are respectively a left side and a right side of the hard disk backplane.

In another possible implementation, the first side and the second side are respectively a right side and a left side of the hard disk backplane.

### BRIEF DESCRIPTION OF DRAWINGS

FIG. 1 is a schematic diagram of a cascading board architecture in the conventional technology;
FIG. 2 is a schematic diagram of another cascading board architecture in the conventional technology;
FIG. 3 is a schematic diagram of another cascading board architecture in the conventional technology;
FIG. 4 is a schematic diagram of a structure of a storage device according to an embodiment of this application;
FIG. 5 is a side view of a storage device according to an embodiment of this application;
FIG. 6 is a top view of a storage device according to an embodiment of this application;
FIG. 7 is a top view of another storage device according to an embodiment of this application; and
FIG. 8 is a schematic diagram of plugging and unplugging a cascading board of a storage device according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application.

A high-density hard disk drive (hard disk drive, HDD) is widely applied to the storage field. An overall capacity, a unit density, costs, and maintainability are key competitiveness of the high-density HDD. A combination of an expander (expander) and a hard disk array is a typical architecture of the high-density HDD. The expander mainly exists in two forms. In one form, the expander is directly welded on a printed circuit board (printed circuit board, PCB). In the other form, the expander exists as an independent field replaceable unit (field replaceable unit, FRU). The expander may be referred to as a cascading board in a storage device when being used as an independent FRU. Usually, the storage device mainly has the following several cascading board architectures.

Manner 1: The cascading board is located on one side of the hard disk array in a horizontal plugging manner.

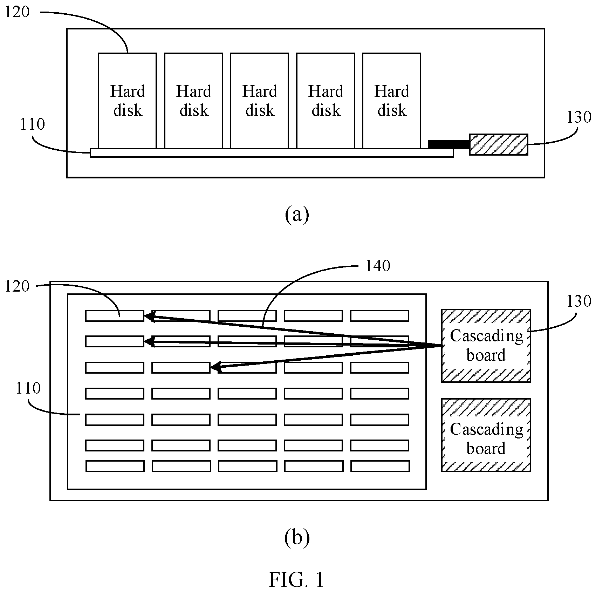

FIG. 1 provides a schematic diagram of a cascading board architecture. (a) in FIG. 1 is a side view of a storage device that uses the cascading board architecture in the manner 1, and (b) in FIG. 1 is a top view of the storage device that uses the cascading board architecture in the manner 1. As shown in (a) in FIG. 1, a hard disk array includes a plurality of hard disks 120, and both a cascading board 130 and the hard disk array are located on a same side of a hard disk backplane 110. The cascading board 130 is connected to the hard disk backplane 110 in a horizontal plugging manner. As shown in (b) in FIG. 1, when this cascading board architecture is used, a high-speed link 140 is relatively long.

The cascading board architecture in the manner 1 is applicable to a 3G serial attached small computer system interface (small computer system interface, SCSI) (serial attached SCSI, SAS) scenario. A main reason is that the 3G SAS scenario has a relatively low rate and a relatively strong link insertion loss tolerance capability. Even if a link is relatively long, impact on a board type selection is relatively small. However, to use this cascading board architecture in a serial advanced technology attachment (serial advanced technology attachment, SATA) hard disk, because a high-speed link is relatively long and a link loss is large, a board of a low loss (low loss) level or even a very low loss (very low loss) level should be used for the hard disk backplane. Therefore, board costs are relatively high. In addition, to support the SATA hard disk, a drive needs to be added on the hard disk backplane. This affects a passive characteristic of the backplane and increases a fault occurrence possibility of the backplane.

Manner 2: The cascading board occupies a hard disk slot.

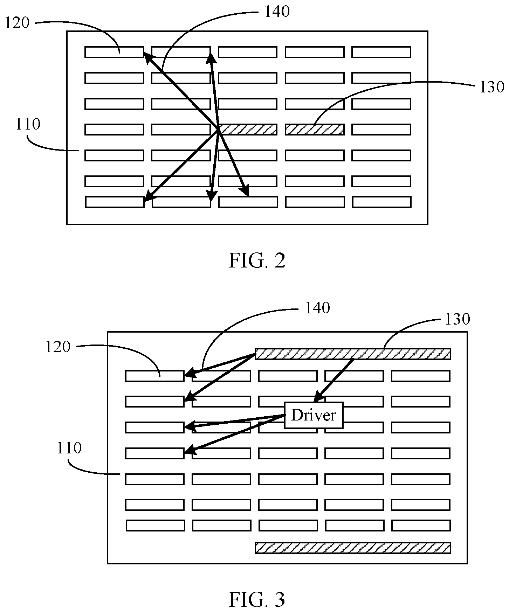

FIG. 2 provides a schematic diagram of another cascading board architecture. FIG. 2 is a top view of the cascading board architecture in the manner 2. As shown in FIG. 2, a cascading board 130 and a hard disk array are located on a same side of a hard disk backplane 110. In addition, the cascading board is installed in the hard disk array in a vertical plugging manner, and occupies a slot of the hard disk array. Compared with that in the manner 1, in the cascading board architecture in the manner 2, a high-speed link is shorter. However, because the cascading board occupies the hard disk slot, impact on an overall hard disk density and an overall capacity is relatively large. In addition, in some implementations, to further shorten the length of the high-speed link, the cascading board is further divided. For example, as shown in FIG. 2, two cascading boards occupy two hard disk slots. If a cascading board is added (for example, four cascading boards are used) to shorten the length of the high-speed link, more hard disk slots are occupied, causing larger impact on the overall capacity. In addition, although the length of the high-speed link is improved compared with that in the manner 1, a board of a low loss level or even a very low loss level still needs to be used for a hard disk of a 6G SATA specification. Therefore, costs are relatively high.

Manner 3: The cascading board is vertically plugged on two sides of the hard disk array.

FIG. 3 provides a schematic diagram of another cascading board architecture. FIG. 3 is a top view of the cascading board architecture in the manner 3. As shown in FIG. 3, a cascading board 130 and a hard disk array are located on a same side of a hard disk backplane 110. In addition, cascading boards 130 are arranged on two sides of the hard disk array in a vertical plugging manner. In the cascading board architecture in the manner 3, no hard disk slot is occupied, and an overall capacity is not affected. In the cascading board architecture in the manner 3, a length of a high-speed link 140 is between that in the manner 1 and that in the manner 2. However, a board of a low loss level or even a very low loss level still needs to be used or a drive still needs to be added for a hard disk of a higher specification, such as a hard disk of a 6G SATA specification. Therefore, costs are relatively high, and a passive characteristic of the hard disk backplane is affected. In addition, because the cascading boards need to be arranged on the two sides of the hard disk array, if an area of the hard disk backplane is specific, a gap of the hard disk array may be squeezed. Therefore, heat dissipation of a hard disk 120 is affected, and heat dissipation costs are increased.

None of the foregoing several cascading board architectures are applicable to a high-specification hard disk structure. This application provides a new cascading board architecture of a storage device. The new cascading board architecture may be applied to various high-specification storage devices, and has relatively low implementation costs.

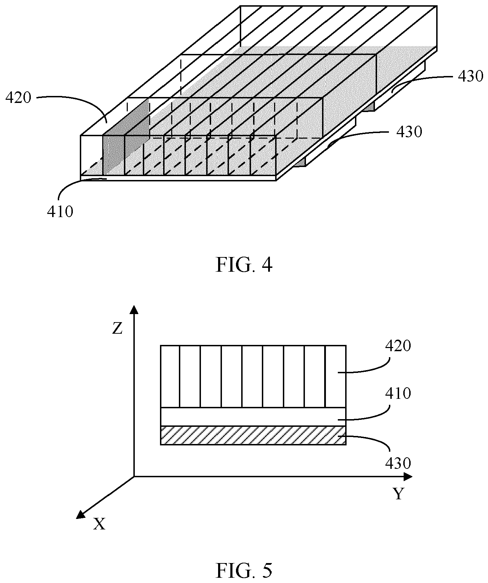

The following describes in detail the cascading board architecture of the storage device in embodiments of this application with reference to FIG. 4 to FIG. 8.

FIG. 4 is a schematic diagram of a structure of a storage device according to an embodiment of this application. As shown in FIG. 4, the storage device in this embodiment of this application includes a hard disk backplane 410, an hard disk array that includes a plurality of hard disks 420, and a cascading board 430 (for example, a first cascading board). The hard disk array is located on a first side of the hard disk backplane. The cascading board 430 is located on a second side of the hard disk backplane 410, and the cascading board 430 is an FRU. It should be understood that only two cascading boards 430 are shown in the storage device shown in FIG. 4. In another embodiment, the storage device mayalternatively include another quantity of cascading boards (for example, may further include a second cascading board). A quantity of cascading boards is not limited in this embodiment of this application. In some embodiments, the cascading board 430 may include an expander (expander) chip.

It should be understood that, in the storage device shown in FIG. 4, the hard disk backplane 410 is horizontally disposed, and the hard disk array that includes the plurality of hard disks 420 and the cascading board 430 are respectively located on an upper side and a lower side of the horizontally placed hard disk backplane. In some other embodiments, the hard disk backplane may be alternatively vertically placed. In this case, the hard disk array and the cascading board are respectively located on a left side and a right side of the hard disk backplane.

FIG. 5 is a side view of the storage device shown in FIG. 4. As shown in FIG. 5, the hard disk array that includes the plurality of hard disks 420 is located on the first side of the hard disk backplane 410, and the cascading board 430 is located on the second side of the hard disk backplane 410. The cascading board 430 includes the expander chip.

In this embodiment of the present invention, the first side and the second side of the hard disk backplane are two opposite sides, for example, the left side and the right side, the upper side and the lower side, the right side and the left side, or the lower side and the upper side.

In the storage device in this embodiment of this application, in an implementation solution, the cascading board includes the expander chip and a related component thereof, to form an FRU. The cascading board may be an FRU, so that the hard disk backplane can be passive, thereby reducing an overall failure rate of the storage device. In addition, the cascading board and the hard disk array are respectively located on the two sides of the hard disk backplane, so that the cascading board does not occupy a hard disk slot, does not affect a capacity of the storage device, and does not squeeze a gap of the hard disk array, thereby causing no impact on heat dissipation of the storage device. In addition, because the expander chip is an independent FRU, only the cascading board needs to be replaced when the expander chip needs to be replaced, thereby improving maintainability of the storage device.

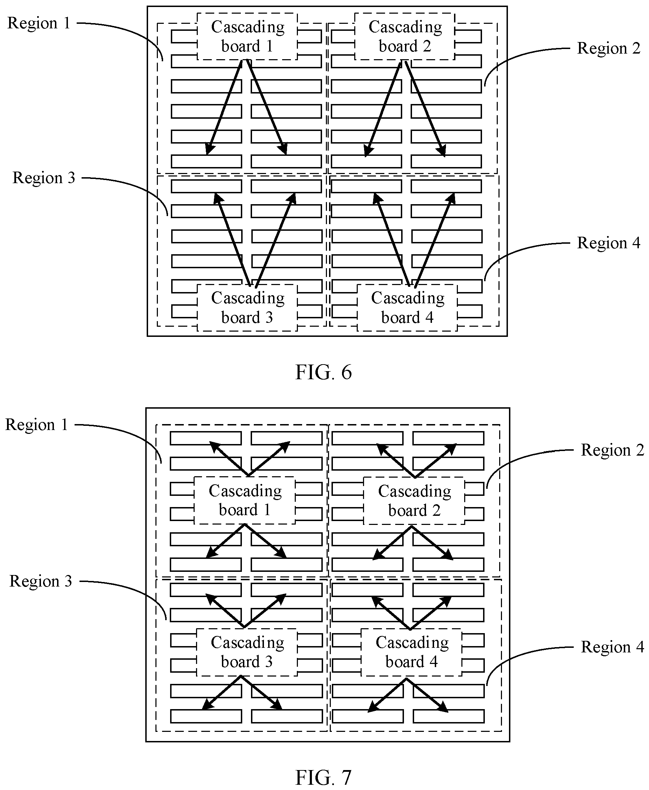

In some embodiments, the storage device may include a plurality of cascading boards, an expander of each cascading board manages one region of the hard disk array. For example, the storage device includes four cascading boards. FIG. 6 is a top view of a storage device including four cascading boards. Because the cascading board is located on the other side of a hard disk backplane, a hard disk array on a first side of the hard disk backplane is represented by using a solid line, and the cascading board on a second side of the hard disk backplane is represented by using a dashed line. As shown in FIG. 6, the storage device includes the four cascading boards, the hard disk array is divided into four regions, and each cascading board manages a hard disk region closest to the cascading board. For example, a cascading board 1 manages a hard disk region 1, a cascading board 2 manages a hard disk region 2, a cascading board 3 manages a hard disk region 3, and a cascading board 4 manages a hard disk region 4.

It should be understood that FIG. 6 shows only one instance of a plurality of cascading boards. The storage device in this embodiment of this application may alternatively include another quantity of cascading boards. In addition, division of hard disk regions managed by the cascading boards is not limited in this embodiment of this application.

The hard disk array can be regionally managed by using a plurality of cascading boards, and each cascading board manages a nearby hard disk array region, thereby shortening a length of a high-speed link between the cascading board and the hard disk backplane.

In some other embodiments, positions of a plurality of cascading board slots may be further optimized. For example, the storage device includes four cascading boards. FIG. 7 is a top view of another storage device that includes four cascading boards according to an embodiment of this application. As shown in FIG. 7, the storage device includes the four cascading boards, the hard disk array is divided into four regions, and each cascading board manages a hard disk region closest to the cascading board. For example, a cascading board 1 manages a hard disk region 1, a cascading board 2 manages a hard disk region 2, a cascading board 3 manages a hard disk region 3, and a cascading board 4 manages a hard disk region 4. In addition, each cascading board is located at a central position of the corresponding hard disk region. For example, the cascading board 1 is located at a central position of the hard disk region 1. In this central arrangement manner, a length of a high-speed link in each region is further shortened.

In the storage device in this embodiment of this application, because the cascading board and the hard disk array are respectively located on the two sides of the hard disk backplane, the cascading board is spatially decoupled from the hard disk array, so that a position of the cascading board can flexibly change and does not interfere with the hard disk array, thereby greatly shortening a length of a link from the cascading board to a remote hard disk slot.

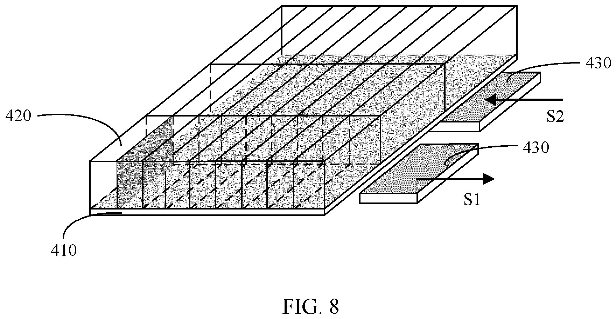

In a storage system in this embodiment of this application, the cascading board and the hard disk array are respectively located on the two sides of the hard disk backplane, and the cascading board is an independent FRU. When a component (for example, the expander chip) on the cascading board needs to be replaced, the cascading board may be directly plugged and unplugged from a side of the storage device, to facilitate device maintenance. FIG. 8 is a schematic diagram of plugging and unplugging a cascading board of a storage device according to an embodiment of this application.

As shown in FIG. 8, S1 is a direction in which a cascading board 430 is unplugged. When the cascading board needs to be replaced or maintained, the cascading board on a second side of a hard disk backplane may be unplugged in the direction S1 parallel to the hard disk backplane. S2 is a direction in which the cascading board 430 is plugged. When the cascading board needs to be installed on the second side of the hard disk backplane, the cascading board may be plugged into the second side of the hard disk backplane in the direction S2 parallel to the hard disk backplane.

In this manner, the cascading board can be conveniently plugged and unplugged, thereby improving maintainability of the storage device.

When the hard disk backplane of the storage device is vertically disposed, an arrangement of the hard disk array and the cascading board and cascading board plugging and unplugging manners are similar to those in the case in which the hard disk backplane is horizontally disposed. For brevity, details are not described.

In the storage device in this embodiment of this application, the hard disk array and the cascading board are located on the two sides of the hard disk backplane, and the position of the cascading board may be flexibly arranged, thereby shortening a length of a link from the cascading board to a hard disk slot, and reducing a link loss. Therefore, a hard disk device of a relatively high specification (for example, 6G SATA) may be implemented by using a board of a middle loss (middle loss) level, thereby reducing board costs. In addition, because of a relatively short link, no drive needs to be designed on the hard disk backplane, thereby reducing drive costs. Therefore, the hard disk backplane implements a passive design, thereby greatly reducing an overall failure rate.

Because the hard disk array and the cascading board are respectively located on the two sides of the hard disk backplane, the cascading board does not occupy a hard disk slot, and does not affect a capacity and a hard disk density of the storage device. The capacity of the storage device can be increased by 5% to 10%. In addition, because the cascading board and the hard disk array are not on a same side, the cascading board does not squeeze the gap of the hard disk array, so that the hard disk array can be arranged in a relatively large gap, to expand a heat dissipation air duct, thereby reducing heat dissipation costs and reducing overall noise.

The cascading board can be made into an FRU, and therefore can be independently replaced to facilitate upgrading and maintenance of the storage device.

It should be understood that "some embodiments" or "an embodiment" mentioned in the entire specification does not mean that particular features, structures, or characteristics related to embodiments are included in at least some embodiments of this application. Therefore, "in some embodiments" or "in an embodiment" appearing throughout the specification does not refer to a same embodiment. In addition, these particular features, structures, or characteristics may be combined in one or more embodiments in any appropriate manner. It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A storage device, comprising: a hard disk backplane (410), a first cascading board (430), and a hard disk array, wherein the hard disk array comprises a plurality of hard disks (420);
the hard disk array is located on a first side of the hard disk backplane (410); and
the first cascading board (430) is a field replaceable unit FRU, and the first cascading board (430) is located on a second side of the hard disk backplane (410).

2. The storage device according to claim 1, wherein the storage device further comprises a second cascading board, the second cascading board is located on the second side of the hard disk backplane, the hard disk array comprises a first hard disk region and a second hard disk region, the first cascading board manages the first hard disk region, and the second cascading board manages the second hard disk region.

3. The storage device according to claim 2, wherein the first cascading board is located at a central position of the first hard disk region, and the second cascading board is located at a central position of the second hard disk region.

4. The storage device according to any one of claims 1 to 3, wherein the first cascading board is installed on the second side of the hard disk backplane in a pluggable manner.

5. The storage device according to claim 2 or 3, wherein the second cascading board is installed on the second side of the hard disk backplane in a pluggable manner.

6. The storage device according to any one of claims 1 to 5, wherein the first cascading board has an expander chip.

7. The storage device according to any one of claims 2 to 5, wherein the second cascading board has an expander chip.

8. The storage device according to any one of claims 1 to 7, wherein the first side and the second side are respectively an upper side and a lower side of the hard disk backplane.

9. The storage device according to any one of claims 1 to 7, wherein the first side and the second side are respectively a lower side and an upper side of the hard disk backplane.

10. The storage device according to any one of claims 1 to 7, wherein the first side and the second side are respectively a left side and a right side of the hard disk backplane.

11. The storage device according to any one of claims 1 to 7, wherein the first side and the second side are respectively a right side and a left side of the hard disk backplane.
